# EUROPEAN PATENT SPECIFICATION

(11) **EP 2 438 098 B1**
(45) Date of publication and mention of the grant of the patent: **29.10.2014**
(21) Application number: 10722253.1
(22) Date of filing: 26.05.2010
(51) Int. Cl.: C08F 238/00, C08G 18/00, C08J 3/24, C08L 75/14, C08G 18/28, C08G 18/73, C08G 18/79

(54) **THIOL-YNE SHAPE MEMORY POLYMER**
THIOL-YN-FOMGEDÄCHTNISPOLYMER
POLYMÈRES THIOL-YNE À MÉMOIRE DE FORME

(30) Priority: 03.06.2009 US 183759 P
(43) Date of publication of application: 11.04.2012
(73) Proprietor: 3M Innovative Properties Company, Saint Paul, MN 55133-3427 (US)
(72) Inventor: CLAPPER, Jason, D., Saint Paul, MN 55133-3427 (US); LEWANDOWSKI, Kevin, M., Saint Paul, MN 55133-3427 (US)
(74) Representative: Vossius & Partner
(86) International application number: PCT/US2010/036096
(87) International publication number: WO 2010/141274

(56) References cited:
- WO-A1-01/07499
- US-A- 4 283 551
- US-A1- 2008 085 946
- US-B1- 6 986 855

## Description

### Field of the Invention

This disclosure relates to a shape memory polymer composition, polymers therefrom, and articles prepared from the shape memory composition.

### Background

Shape memory polymers (SMPs) have the unique ability to "remember" a pre-set shape and, upon exposure to the appropriate stimuli, shift from a deformed or altered shape back to the pre-set shape. Several commercially important uses have been developed for shape memory polymers. For example, shape memory polymers are commonly used in various medical, dental, mechanical, and other technology areas for a wide variety of products.

SMPs have a defined melting point (Tₘ) or glass transition temperature (T_{g}). Above the Tₘ or T_{g}, the polymers are elastomeric in nature, and are capable of being deformed with high strain. The elastomeric behavior of the polymers results from either chemical crosslinks or physical crosslinks (often resulting from microphase separation). Therefore, SMPs can be glassy or crystalline and can be either thermosets or thermoplastics.

The permanent shape of the SMP is established when the crosslinks are formed in an initial casting or molding process. The SMP can be deformed from the original shape to a temporary shape. This step is often done by heating the polymer above its Tₘ or T_{g} and deforming the sample, and then holding the deformation in place while the SMP cools. Alternatively, in some instances, the polymer can be deformed at a temperature below its Tₘ or T_{g} and maintain that temporary shape. Subsequently, the original shape is recovered by heating the material above the melting point or glass transition temperature. The recovery of the original shape, which is induced by an increase in temperature, is called the thermal shape memory effect. Properties that describe the shape memory capabilities of a material are the shape recovery of the original shape and the shape fixity of the temporary shape.

Shape memory polymers may be considered super-elastic rubbers; when the polymer is heated to a rubbery state, it can be deformed under resistance of about 1 MPa modulus, and when the temperature is decreased below either a crystallization temperature or a glass transition temperature, the deformed shape is fixed by the lower temperature rigidity while, at the same time, the mechanical energy expended on the material during deformation is stored. When the temperature is raised above the transition temperature (Tₘ or T_{g}), the polymer will recover to its original form as driven by the restoration of network chain conformational entropy. The advantages of the SMPs will be closely linked to their network architecture and to the sharpness of the transition separating the rigid and rubber states. SMPs have an advantage of high strain; to several hundred percent.

### Summary

The present disclosure provides a shape memory polymer composition comprising:
a) an alkynyl compound having at least one reactive alkynyl group,
b) a polythiol. c) less than 2 wt.% of a free radical initiator; wherein the 2x molar equivalents of alkynyl groups of the polyalkynyl compound is +/- 20% of the molar equivalents of thiol groups of the polythiol.

By "reactive alkynyl group", it is meant the alkyl is reactive toward a thiol compound by free radical addition: a thiol-yne reaction.

In another aspect, the present disclosure provides elastically deformed shaped articles, which when heated above a transition temperature, will elastically recover to an original, permanent shape, the shaped article comprising the crosslinked (cured) shape memory polymer composition.

In another embodiment, the disclosure provides a method of preparing a shaped article comprising the steps of casting the shape memory polymer composition into a mold and allowing it to cure. The resultant permanent shape of the shaped article is the result of crosslinking of the cured polymer. The cast and cured article is deformed into a second temporary shape, wherein then the original cast shape may be recovered by heating the article above the T_{g}.

The instant shape memory polymers provide tunable elastic rubbery modulus above the T_{g}. Besides their shape memory effects, these materials are also cast and curable; allowing for the preparation and processing of more complex shaped articles. The instant shape memory polymer compositions have narrower ranges of T_{g}, and a good balance of elongation and fracture toughness, as compared to known shape memory polymers.

The shape polymer composition may be used in the preparation of any shaped article in which it is advantageous for the article to elastically recover an original shape when heated above a T_{g}. In some embodiments, the shape memory polymer composition may be cast and cured into a permanent shape and deformed to a temporary shape at a temperature below the T_{g}, so the deformed temporary shape is retained. Alternatively, the shape memory polymer composition may be cast and cured into a permanent shape, deformed at a temperature above the T_{g}, and then cooled to a temperature below the T_{g} so the deformed temporary shape is retained. With either deformation method, when the deformed article is heated above the T_{g}, or by exposure to solvent, the deformed article will elastically recover the permanent shape.

Useful shaped articles include mechanical fasteners, orthodontic appliances, stents, patches and other implants for human health care, arbitrarily shape-adjustable structural implements, including personal care items (dinnerware, brushes, etc.) and hardware tool handles, self healing plastics, drug delivery, rheological modifiers for paints, detergents and personal care products, impression material for molding, duplication, rapid prototyping, orthodontics, and figure-printing, toys, reversible embossing for information storage, temperature sensors, safety valves, heat shrink tapes or seals, and heat controlled couplings.

As used herein, "alkyl" includes straight-chained, branched, and cyclic alkyl groups and includes both unsubstituted and substituted alkyl groups. Unless otherwise indicated, the alkyl groups typically contain from 1 to 20 carbon atoms. Examples of "alkyl" as used herein include, but are not limited to, methyl, ethyl, n-propyl, n-butyl, n-pentyl, isobutyl, t-butyl, isopropyl, n-octyl, n-heptyl, ethylhexyl, cyclopentyl, cyclohexyl, cycloheptyl, adamantyl, and norbornyl, and the like. Unless otherwise noted, alkyl groups may be mono- or polyvalent.

As used herein, the term "heteroalkyl" includes both straight-chained, branched, and cyclic alkyl groups with one or more heteroatoms independently selected from S, O, and N with both unsubstituted and substituted alkyl groups. Unless otherwise indicated, the heteroalkyl groups typically contain from 1 to 20 carbon atoms. "Heteroalkyl" is a subset of "hydrocarbyl containing one or more S, N, O, P, or Si atoms" described below. Examples of "heteroalkyl" as used herein include, but are not limited to, methoxy, ethoxy, propoxy, 3,6-dioxaheptyl, 3-(trimethylsilyl)-propyl, 4-dimethylaminobutyl, and the like. Unless otherwise noted, heteroalkyl groups may be mono- or polyvalent.

As used herein, "aryl" is an aromatic group containing 6-18 ring atoms and can contain optional fused rings, which may be saturated, unsaturated, or aromatic. Examples of an aryl groups include phenyl, naphthyl, biphenyl, phenanthryl, and anthracyl. Heteroaryl is aryl containing 1-3 heteroatoms such as nitrogen, oxygen, or sulfur and can contain fused rings. Some examples of heteroaryl groups are pyridyl, furanyl, pyrrolyl, thienyl, thiazolyl, oxazolyl, imidazolyl, indolyl, benzofuranyl, and benzthiazolyl. Unless otherwise noted, aryl and heteroaryl groups may be mono- or polyvalent.

As used herein, "(hetero)hydrocarbyl" is inclusive of hydrocarbyl alkyl and aryl groups, and heterohydrocarbyl heteroalkyl and heteroaryl groups, the later comprising one or more catenary oxygen heteroatoms such as ether or amino groups. Heterohydrocarbyl may optionally contain one or more catenary (in-chain) functional groups including ester, amide, urea, urethane, and carbonate functional groups. Unless otherwise indicated, the non-polymeric (hetero)hydrocarbyl groups typically contain from 1 to 60 carbon atoms. Some examples of such heterohydrocarbyls as used herein include, but are not limited to, methoxy, ethoxy, propoxy, 4-diphenylaminobutyl, 2-(2'-phenoxyethoxy)ethyl, 3,6-dioxaheptyl, 3,6-dioxahexyl-6-phenyl, in addition to those described for "alkyl", "heteroalkyl", "aryl", and "heteroaryl" *supra.*

### Brief Description of the Drawings

Figure 1 is a plot of the shape memory cycle for thiol-yne material from Example 1.
Figure 2 are T_{g} profiles of Example 1 and Comparative Example 1 shape memory polymers.

### Detailed Description

The present disclosure provides a shape memory polymer composition comprising a) an alkynyl compound having at least one reactive alkynyl group, b) a polythiol, c) less than 2 wt.% of a free radical initiator; wherein the 2x molar equivalents of alkynyl groups of the polyalkynyl compound is +/- 20% of the molar equivalents of thiol groups of the polythiol. The disclosure further provides a shaped article in an elastically deformed state comprising a crosslinked shape memory polymer composition. The present disclosure provides new compositions that may be formulated as 100% solids, cured by free-radical means, and exhibit properties that meet or exceed those of the art. This class of shape-memory polymers depends on the plastic deformation of the crosslinked polymer to hold a temporary deformed shape.

The curable composition contains an alkynyl compound having at least one reactive alkynyl group. Desirably, the alkynyl group facilitates the thiol-yne addition reaction with two -SH groups. Such compounds are of the general formula: 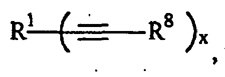 wherein
R¹ is a polyvalent hydrocarbyl group, and x is at least 1-4, preferably 2-3, and R⁸ is an H or a (hetero)hydrocarbyl group. Preferably an R⁸ is an H, or a hydrocarbyl group (including alkyl and aryl groups) and most preferably R⁸ is H or C₁-C₈ alkyl. It has been observed that polyalkynes, having two or more alkynyl groups, provide higher crosslink density and impart higher T_{g} to the shape memory polymers derived therefrom, but may also reduce the elongation.

In some embodiments, R¹ is R², where R² is an aliphatic or aromatic group. R² can be selected from alkyl groups of 1 to 20 carbon atoms or aryl aromatic group containing 6-18 ring atoms. R² has a valence of x, where x is at least 1-4, preferably 2-3.

In some embodiments, R¹ is R³, where R³ is a heterocyclic group. Heterocyclic groups include both aromatic and non-aromatic ring systems that contain one or more nitrogen, oxygen and sulfur heteroatoms. Suitable heteroaryl groups include furyl, thienyl, pyridyl, quinolinyl, tetrazolyl, imidazo, and triazinyl. The heterocyclic groups can be unsubstituted or substituted by one or more substituents selected from the group consisting of alkyl, alkoxy, alkylthio, hydroxy, halogen, haloalkyl, polyhaloalkyl, perhaloalkyl (e.g., trifluoromethyl), trifluoroalkoxy (e.g., trifluoromethoxy), nitro, amino, alkylamino, dialkylamino, alkylcarbonyl, alkenylcarbonyl, arylcarbonyl, heteroarylcarbonyl, aryl, arylalkyl, heteroaryl, heteroarylalkyl, heterocyclyl, heterocycloalkyl, nitrile and alkoxycarbonyl.

Illustrative examples of such alkynes include phenylacetylene, 1-hexyne, 1-octyne, 1-decyne, 1,5-hexadiyne, 1,7-octadiyne, 3,3-dimethyl-1-butyne, propargyl chloride, propargyl bromide, propargyl alcohol, 3-butyn-1-ol, 1-octyn-3-ol, methyl propargyl ether, propargyl ether, 3-methoxy-3-methyl-1-butyne, 2-methyl-3-butyn-2-ol, 1-ethynylcyclohexylamine, mono-propargylamine, 1-dimethylamino-2-propyne, tripropargylamine, 3-butyne-2-one, propiolic acid, 1-ethynyl-1-cyclohexanol, methyl propiolate, and trimethylsilylacetylene, 2-pentyne, 4-octyne, 2-butyne-1,4-diol, 3-hexyne-2,5-diol, and 1-phenyl-1-butyne.

The alkynyl compounds may be prepared by the following general reaction schemes where R⁴ is a (hetero)hydrocarbyl group, R⁸ is H or a (hetero)hydrocarbyl group, x is at least 1, preferably 2-3; and y is 1 to 10, preferably 1. 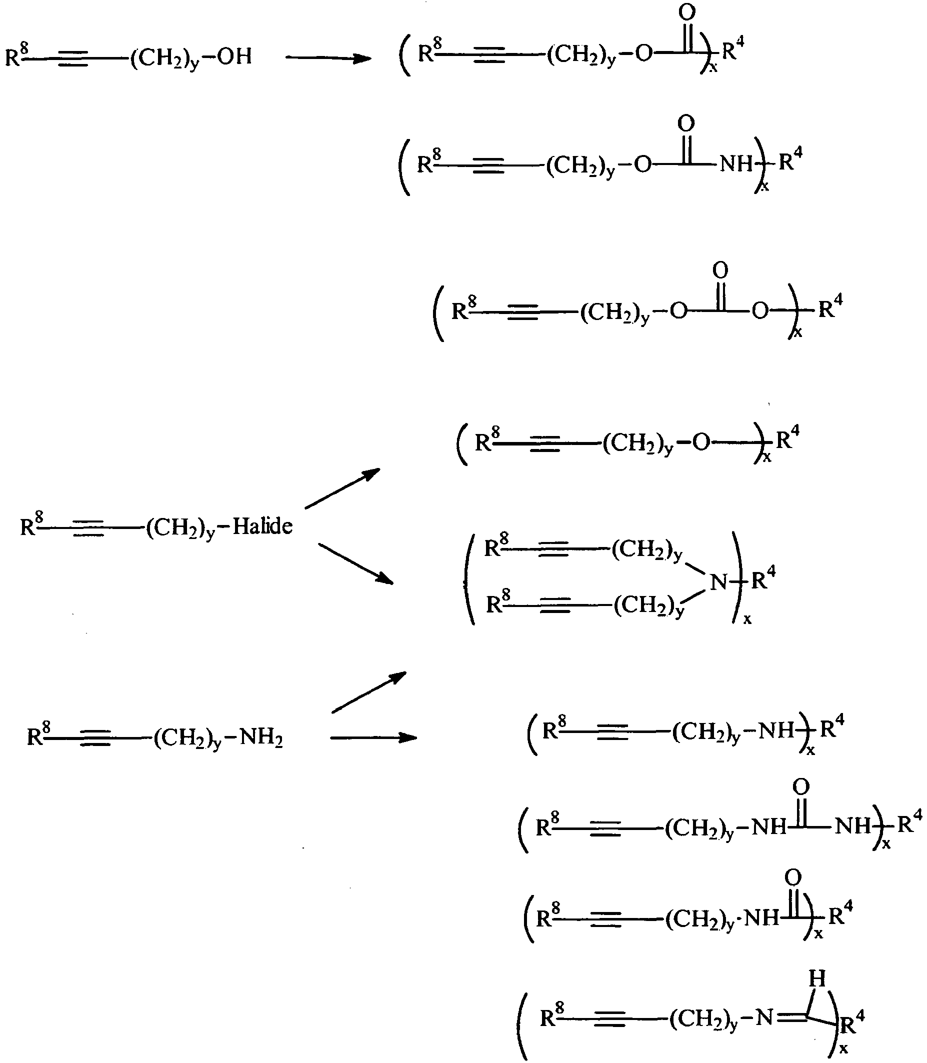 wherein
R⁴ is a (hetero)hydrocarbyl group,
R⁸ is H or a (hetero)hydrocarbyl group,
x is at least 1, preferably 2-3; and
y is 1 to 10, preferably 1.

In some embodiments, the alkyne compound is the reaction product of a mono- or polyisocyanate: 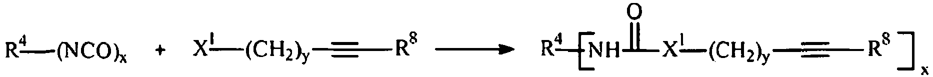 wherein
R⁴ is a (hetero)hydrocarbyl group,
R⁸ is H or a (hetero)hydrocarbyl group,
X¹ is -O-, -S- or -NR⁶-, where R⁶ is H or C₁-C₄ alkyl;
x is at least 1, preferably 2-3; and
y is 1 to 10, preferably 1.

Useful monoisocyanates include octadecyl isocyanate, butyl isocyanate, hexyl isocyanate, phenyl isocyanate, benzyl isocyanate, naphthyl isocyanate, and the like.

Polyisocyanate compounds useful in preparing the alkyne compounds comprise isocyanate groups attached to the multivalent organic group that can comprise, in some embodiments, a multivalent aliphatic, alicyclic, or aromatic moiety (R⁴); or a multivalent aliphatic, alicyclic or aromatic moiety attached to a biuret, an isocyanurate, or a uretdione, or mixtures thereof. Preferred polyfunctional isocyanate compounds contain at least two isocyanate (-NCO) radicals. Compounds containing at least two -NCO radicals are preferably comprised of di- or trivalent aliphatic, alicyclic, aralkyl, or aromatic groups to which the -NCO radicals are attached. Aliphatic di- or trivalent groups are preferred.

Representative examples of suitable polyisocyanate compounds include isocyanate functional derivatives of the polyisocyanate compounds as defined herein. Examples of derivatives include, but are not limited to, those selected from the group consisting of ureas, biurets, allophanates, dimers and trimers (such as uretdiones and isocyanurates) of isocyanate compounds, and mixtures thereof. Any suitable organic polyisocyanate, such as an aliphatic, alicyclic, aralkyl, or aromatic polyisocyanate, may be used either singlely or in mixtures of two or more.

The aliphatic polyisocyanate compounds generally provide better light stability than the aromatic compounds. Aromatic polyisocyanate compounds, on the other hand, are generally more economical and reactive toward nucleophiles than are aliphatic polyisocyanate compounds. Suitable aromatic polyisocyanate compounds include, but are not limited to, those selected from the group consisting of 2,4-toluene diisocyanate (TDI), 2,6-toluene diisocyanate, an adduct of TDI with trimethylolpropane (available as Desmodur™ CB from Bayer Corporation, Pittsburgh, PA), the isocyanurate trimer of TDI (available as Desmodur™ IL from Bayer Corporation, Pittsburgh, PA), diphenylmethane 4,4'-diisocyanate (MDI), diphenylmethane 2,4'-diisocyanate, 1,5-diisocyanato-naphthalene, 1,4-phenylene diisocyanate, 1,3-phenylene diisocyanate, 1-methyoxy-2,4-phenylene diisocyanate, 1-chlorophenyl-2,4-diisocyanate, and mixtures thereof.

Examples of useful alicyclic polyisocyanate compounds include, but are not limited to, those selected from the group consisting of dicyclohexylmethane diisocyanate (H₁₂ MDI, commercially available as Desmodur™ available from Bayer Corporation, Pittsburgh, PA), 4,4'-isopropyl-bis(cyclohexylisocyanate), isophorone diisocyanate (IPDI), cyclobutane-1,3-diisocyanate, cyclohexane 1,3-diisocyanate, cyclohexane 1,4-diisocyanate (CHDI), 1,4-cyclohexanebis(methylene isocyanate) (BDI), dimer acid diisocyanate (available from Bayer), 1,3-bis(isocyanatomethyl)cyclohexane (H₆ XDI), 3-isocyanatomethyl-3,5,5-trimethylcyclohexyl isocyanate, and mixtures thereof.

Examples of useful aliphatic polyisocyanate compounds include, but are not limited to, those selected from the group consisting of tetramethylene 1,4-diisocyanate, hexamethylene 1,4-diisocyanate, hexamethylene 1,6-diisocyanate (HDI), octamethylene 1,8-diisocyanate, 1,12-diisocyanatododecane, 2,2,4-trimethyl-hexamethylene diisocyanate (TMDI), 2-methyl-1,5-pentamethylene diisocyanate, dimer diisocyanate, the urea of hexamethylene diisocyanate, the biuret of hexamethylene 1,6-diisocyanate (HDI) (Desmodur™N-100 and N-3200 from Bayer Corporation, Pittsburgh, PA), the isocyanurate of HDI (available as Desmodur™N-3300 and Desmodur™N-3600 from Bayer Corporation, Pittsburgh, PA), a blend of the isocyanurate of HDI and the uretdione of HDI (available as Desmodur™N-3400 available from Bayer Corporation, Pittsburgh, PA), and mixtures thereof.

Examples of useful aralkyl polyisocyanates (having alkyl substituted aryl groups) include, but are not limited to, those selected from the group consisting of m-tetramethyl xylylene diisocyanate (m-TMXDI), p-tetramethyl xylylene diisocyanate (p-TMXDI), 1,4-xylylene diisocyanate (XDI), 1,3-xylylene diisocyanate, p-(1-isocyanatoethyl)phenyl isocyanate, m-(3-isocyanatobutyl)phenyl isocyanate, 4-(2-isocyanatocyclohexylmethyl)phenyl isocyanate, and mixtures thereof.

Preferred polyisocyanates, in general, include those selected from the group consisting of 2,2,4-trimethyl-hexamethylene diisocyanate (TMDI), tetramethylene 1,4-diisocyanate, hexamethylene 1,4-diisocyanate, hexamethylene 1,6-diisocyanate (HDI), octamethylene 1,8-diisocyanate, 1,12- diisocyanatododecane, mixtures thereof, and a biuret, an isocyanurate, or a uretdione derivatives.

In some embodiments, the curable shape memory polymer composition may further comprise other known shape memory polymer compositions including other thiol-ene reactive components other than the above described alkynyl compound. Such optional components will have at least two reactive double bonds, and may be of the formula R⁷-(CH=CH₂)_{z}, where R⁷ is a (hetero)hydrocarbyl group and z is at least 2.

In another embodiment, the instant composition may further comprise the thiol-ene compositions described in U.S. 7,521,015 (Cheng et al.) and 7,463,417 (Duncan et al.), incorporated herein by reference. In yet another embodiment, the instant composition may further comprise bicyclic ene compounds, such as norbornene compounds, such as are described in U.S. 4,808,638 (Steinkraus et al.), incorporated herein by reference. In some embodiments, the optional thiol reactive component will comprise a multicyclic diene having at least two cycle olefinic rings with at least two reactive double bonds, such as described in JP 2003-26805A.

The optional alkene component of the shape memory polymer composition may be used to reduce the crosslink density, modify the T_{g}, or provide other beneficial physical properties. Such optional components that cure by means of thiol addition to an alkene may be used in amounts up to 90 molar percent of the alkyne component, and such that 2x the molar functional group equivalent of alkyne plus the molar functional group equivalent of alkene is equal to the thiol molar equivalents +/- 20%. It is noted that the instant alkynes can react with two equivalent of thiol.

The SMP composition further comprises thiols of the formula R⁵-(SH)ₙ, where n is at least 2, preferably 2 to 6. R⁵ includes any (hetero)hydrocarbyl groups, including aliphatic and aromatic polythiols. R⁵ may optionally further include one or more functional groups including pendent hydroxyl, acid, ester, or cyano groups or catenary (in-chain) ether, urea, urethane and ester groups.

In one embodiment, R⁵ comprises a non-polymeric aliphatic or cycloaliphatic moiety having from I to 30 carbon atoms. In another embodiment, R⁵ is polymeric and comprises a polyoxyalkylene, polyester, polyolefin, polyacrylate, or polysiloxane polymer having pendent or terminal reactive -SH groups. Useful polymers include, for example, thiol-terminated polyethylenes or polypropylenes, and thiol-terminated poly(alkylene oxides) .

Specific examples of useful polythiols include 2,3-dimercapto-1-propanol, 2-mercaptoethyl ether, 2-mercaptoethyl sulfide, 1,6-hexanedithiol, 1,8-octanedithiol, 1,8-dimercapto-3,6-dithiaoctane, propane-1,2,3-trithiol, and trithiocyanuric acid.

Another useful class of polythiols includes those obtained by esterification of a polyol with a terminally thiol-substituted carboxylic acid (or derivative thereof, such as esters or acyl halides) including α- or β-mercaptocarboxylic acids such as thioglycolic acid, β-mercaptopropionic acid, 2-mercaptobutyric acid, or esters therof. Useful examples of commercially available compounds thus obtained include ethylene glycol bis(thioglycolate), pentaerythritol tetrakis(3-mercaptopropionate), ethylene glycol bis(3-mercaptopropionate), trimethylolpropane tris(thioglycolate), trimethylolpropane tris(3-mercaptopropionate), pentaerythritol tetrakis(thioglycolate), pentaerythritol tetrakis(3-mercaptopropionate), pentaerithrytol tetrakis (3-mercaptobutylate), and 1,4-bis 3-mercaptobutylyloxy butane. A specific example of a polymeric polythiol is polypropylene ether glycol bis(3-mercaptopropionate) which is prepared by esterification of polypropylene-ether glycol (e.g., Pluracol™ P201, BASF Wyandotte Chemical Corp.) and 3-mercaptopropionic acid by esterification.

Useful soluble, high molecular weight thiols include polyethylene glycol di(2-mercaptoacetate), LP-3™ resins supplied by Morton Thiokol Inc. (Trenton, NJ), and Permapol P3™ resins supplied by Products Research & Chemical Corp. (Glendale, CA) and compounds such as the adduct of 2-mercaptoethylamine and caprolactam.

The polythiol may crosslink the alkyne component as described above. The degree to which crosslinking occurs depends on the relative amounts of different monomers and on the conversion of the reactive groups in those monomers, which in turn, is affected by reaction conditions including time, temperature, initiator, and component purity. The components are generally used in approximately 2:1 molar amounts of thiol to alkyne, +/-20%. Therefore, the molar ratio of thiol groups of the polythiol to alkyne groups will be from 2.4:1 to 2:1.2, preferably 2.2:1 to 2:1.1. In embodiments where the shape memory polymer composition further comprises an alkene component, the 2X molar functional group equivalent of alkyne plus the molar functional group equivalent of alkene is equal to the thiol equivalents +/- 20%. As the alkyne can react with two equivalents of thiol; 2x moles of alkyne equivalent + moles of alkene equivalents = moles to thiol equivalents +/-20%.

The degree of crosslinking affects the modulus of the shape memory polymer above the T_{g}. If the crosslinking density is too high, the polymer breaks at relatively low levels of elongation. With no crosslinking, the polymer yields at high temperature and does not display shape-memory recovery.

Other additives can include plasticizers, organic or inorganic fillers, and antioxidants. Any such additional additives should be used in amounts such that the physical properties of the shape memory polymer are maintained. Generally such additives are used in amounts of less that 5 wt.%, relative to the total amount of the shape memory polymer composition.

The shaped articles can be prepared from the shape memory polymer compositions by any suitable technique used for thermoset polymers. The shaped articles may be cast into a suitable mold and cured by exposure to actinic radiation such as UV light. The composition may be exposed to any form of actinic radiation, such as visible light or UV radiation, but is preferably exposed to UVA (320 to 390 nm) or UVV (395 to 445 nm) radiation. Generally, the amount of actinic radiation should be sufficient to form a solid mass that is not sticky to the touch. Generally, the amount of energy required for curing the compositions of the invention ranges from about 0.2 to 20.0 J/cm².

To initiate photopolymerization, the molds are filled, placed under a source of actinic radiation such as a high-energy ultraviolet source having a duration and intensity of such exposure to provide for essentially complete (greater than 80%) polymerization of the composition contained in the molds. If desired, filters may be employed to exclude wavelengths that may deleteriously affect the reactive components or the photopolymerization. Photopolymerization may be affected via an exposed surface of the curable composition, or "through-mold" by appropriate selection of a mold material having the requisite transmission at the wavelengths necessary to effect polymerization.

Photoinitiation energy sources emit actinic radiation, i.e., radiation having a wavelength of 700 nanometers or less which is capable of producing, either directly or indirectly, free radicals capable of initiating polymerization of the shape memory polymer compositions. Preferred photoinitiation energy sources emit ultraviolet radiation, i.e., radiation having a wavelength between about 180 and 460 nanometers, including photoinitiation energy sources such as mercury arc lights, carbon arc lights, low, medium, or high pressure mercury vapor lamps, swirl-flow plasma arc lamps, xenon flash lamps ultraviolet light emitting diodes, and ultraviolet light emitting lasers. Particularly preferred ultraviolet light sources are xenon flash lamps available from Xenon Corp, Wilburn, MA, such as models RC-600, RC-700 and RC-747 pulsed UV-Vis curing systems.

Any conventional free radical initiator, including photo- and thermal initiators may be used. In one embodiment, the initiator is a photoinitiator and is capable of being activated by UV radiation. Useful photoinitiators include e.g., benzoin ethers such as benzoin methyl ether and benzoin isopropyl ether, substituted benzoin ethers, substituted acetophenones such as 2,2-dimethoxy-2-phenylacetophenone, and substituted alpha-ketols. Examples of commercially available photoinitiators include Irgacure™ 819 and Darocur™1173 (both available form Ciba-Geigy Corp., Hawthorne, NY), Lucem TPO™ (available from BASF, Parsippany, NJ) and Irgacure™651, (2,2-dimethoxy-1,2-diphenyl-1-ethanone) which is available from Ciba-Geigy Corp. Preferred photoinitiators are ethyl 2,4,6-trimethylbenzoylphenyl phosphinate (Lucirin™ TPO-L) available from BASF, Mt. Olive, NJ, 2-hydroxy-2-methyl-1-phenyl-propan-1-one (IRGACURE 1173™, Ciba Specialties), 2,2-dimethoxy-2-phenyl acetophenone (IRGACURE 651™, Ciba Specialties), phenyl bis(2,4,6-trimethyl benzoyl)phosphine oxide (IRGACURE 819, Ciba Specialties). Other suitable photoinitiators include mercaptobenzothiazoles, mercaptobenzooxazoles and hexaryl bisimidazole.

Examples of suitable thermal initiators include peroxides such as benzoyl peroxide, dibenzoyl peroxide, dilauryl peroxide, cyclohexane peroxide, methyl ethyl ketone peroxide, hydroperoxides, e.g., tert-butyl hydroperoxide and cumene hydroperoxide, dicyclohexyl peroxydicarbonate, 2,2,-azo-bis(isobutyronitrile), and t-butyl perbenzoate. Examples of commercially available thermal initiators include initiators available from DuPont Specialty Chemical (Wilmington, DE) under the VAZO trade designation including VAZO™64 (2,2'-azo-bis(isobutyronitrile)) and VAZO™ 52, and Lucidol™ 70 from Elf Atochem North America, Philadelphia, PA.

The amount of free radical initiator is less than 2 wt.%. In some embodiments, there is no added free radical initiator.

The mold may be flexible or rigid. Useful materials that may be used to make the mold include metal, steel, ceramic, polymeric materials (including thermoset and thermoplastic polymeric materials), or combinations thereof. The materials forming the mold should have sufficient integrity and durability to withstand the particular monomer compositions to be used as well as any heat that may be applied thereto or generated by the polymerization reaction.

To prepare shaped articles having a shape memory, the article is cast and crosslinked (by means of a thiol-yne addition) to form a permanent shape. If the article subsequently is formed into a second shape by deformation, the object can be returned to its original shape by heating the object above the T_{g}. In other embodiments, a solvent such as alkyl alcohol, acetone, etc., can plasticize the polymer composition and cause the same recovery.

The original shaped article, having a first permanent shape, is then deformed by either of two methods. In the first, the shaped article, as molded, is heated above the T_{g}, deformed to impart a temporary shape, then cooled below the T_{g} to lock in the temporary shape. In the second, the shaped article is deformed at a temperature below the T_{g} by the application of mechanical force, whereby the shaped article assumes a second temporary shape through forced deformation; i.e., cold drawing. When significant stress is applied, resulting in an enforced mechanical deformation at a temperature lower than the T_{g}, strains are retained in the polymer, and the temporary shape change is maintained, even after the partial liberation of strain by the elasticity of the polymer.

The shaped article may be deformed in one, two, or three dimensions. All or a portion of the shaped article may be deformed by mechanical deformation. The shaped article may be deformed by any desired method including embossing, compression, twisting, shearing, bending, cold molding, stamping, stretching, uniformly or non-uniformly stretching, or combinations thereof.

The original or permanent shape is recovered by heating the material above the T_{g} whereby the stresses and strains are relieved and the material returns to its original shape. The original or permanent shape of the shaped article can be recovered using a variety of energy sources. The composition can be immersed in a heated bath containing a suitable inert liquid (for example, water or a fluorochemical fluid) that will not dissolve or swell the composition in either its cool or warm states. The composition can also be softened using heat sources such as a hot air gun, hot plate, conventional oven, infrared heater, radiofrequency (R_{f}) sources or microwave sources. The composition can be encased in a plastic pouch, syringe or other container which is in turn heated (e.g., electrically), or subjected to one or more of the above-mentioned heating methods. Alternatively, the original shape of the deformed article may be recovered by exposure to a low molecular weight organic compound, such as a solvent, which acts as a plasticizer. The low molecular weight organic compound diffuses into the polymer bulk, triggering the recovery by plasticizing the crosslinked polymer.

In some embodiments, it may be desirable to recover only a portion of the shaped article. For example, heat and/or solvent can be applied to only a portion of the deformed surface of the substrate to trigger the shape memory recovery in these portions only.

In one embodiment, the shaped article may comprise a heating element, such as a resistive heating element encapsulated thereby. After deformation, the resistive heating element may be connected to a source of electricity imparting heat to the bulk of the polymer, which raises the temperature above the T_{g} so the deformed article assumes the original permanent shape.

In other embodiments, the heating step may be an indirect heating step whereby the deformed polymer is warmed by irradiation, such as infrared radiation. As the responsiveness of the shape memory polymer is limited by the heat capacity and thermal conductivity, the heat transfer can be enhanced by the addition of conductive fillers such as conductive ceramics, carbon black and carbon nanotubes. Such conductive fillers may be thermally conductive and/or electrically conductive. With electrically conductive fillers, the polymer may be heated by passing a current therethrough. In some embodiments, the shape memory polymer may be compounded with conductive fillers, and the polymer heated inductively by placing it in an alternating magnetic field to induce a current.

The polymer compositions can be used to prepare articles of manufacture for use in biomedical applications. For example, sutures, orthodontic materials, bone screws, nails, plates, meshes, prosthetics, pumps, catheters, tubes, films, stents, orthopedic braces, splints, tape for preparing casts, and scaffolds for tissue engineering, implants, and thermal indicators, can be prepared.

The polymer compositions can be formed into the shape of an implant which can be implanted within the body to serve a mechanical function. Examples of such implants include rods, pins, screws, plates and anatomical shapes. A particularly preferred use of the compositions is to prepare sutures that have a rigid enough composition to provide for ease of insertion, but upon attaining body temperature, soften and form a second shape that is more comfortable for the patient while still allowing healing.

There are numerous applications for the shape memory polymer compositions other than biomedical applications. These applications include members requiring deformation restoration after impact absorption, such as bumpers and other auto body parts, packaging for foodstuffs, automatic chokes for internal combustion engines, polymer composites, textiles, pipe joints, heat shrinkable tubes, and clamping pins, temperature sensors, damping materials, sports protective equipment, toys, bonding materials for singular pipes internal laminating materials of pipes, lining materials, clamping pins, members requiring deformation restoration after impact absorption such as automobile bumpers and other parts.

In some embodiments, the shaped articles are fasteners, including grommets and rivets. A rivet may comprise a longitudinally-deformed shaped cylinder that may be inserted into an object or workpiece having an aperture therethrough. Upon heating, the deformed cylinder will contract longitudinally and expand laterally. The radii of the permanent and deformed shapes of the fastener are chosen such that the fastener may be inserted into the workpiece, but will expand to fill and grip the workpiece. Further, the degree of longitudinal deformation (stretching) of the fastener may be chosen such that the fastener will impart compression to the workpiece on heat recovery to the permanent shape.

### Examples

### Test Methods

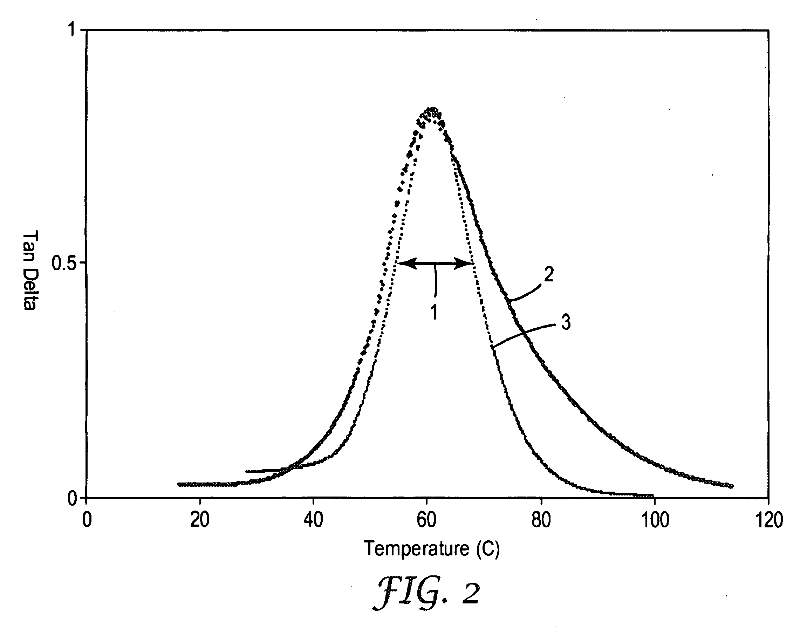

The thermo-mechanical behavior of each sample was analyzed using a Q800 series dynamic mechanical analyzer (TA Instruments, New Castle, DE). Sample strips of dimensions 3.6 cm × 0.5 cm × 0.3 cm (1.4" x 0.2" x 0.1") were placed in the tensile clamps of the DMA and oscillated at a constant frequency of 1 Hz with a displacement of 0.1 microns as the temperature was ramped from 0 to 120 °C. The glass transition temperature of each material was determined from the peak of the tan delta vs. temperature plot generated from these tests (as shown in Figure 2). The fixed height peak width (FHPW) was calculated as the peak width (°C) at approximately half the maximum tan delta intensity for each profile. The storage modulus of the material was recorded in the polymer's rubbery state approximately 20 °C above the T_{g} of the cured sample.

Fracture toughness was measured using pre-cracked sample bars of dimensions 5.92 cm × 0.99 cm × 0.48 cm (2.33" x 0.39" x 0.19"). Samples were placed on a three point bend apparatus on a Sintech load frame in such a way that the applied force was to the side of the bar opposite of the notch or precrack. Stress was applied at 0.3 cm/min (0.1"/min) and the peak force was recorded at break. Sample dimensions and peak force values were used to calculate the fracture toughness of each material sample using methods similar to ASTM D5045.

Elongation was measured by placing dogbone shaped samples between the grips of the Sintech load frame within a heating furnace. The temperature was brought to approximately 10 °C below the measured T_{g} of each material sample and allowed to equilibrate for 5 min. The dogbone samples were then elongated at 2.5 cm/min (1"/min) until break. Elongation of each sample at break was calculated as (L₀-L_{F})/L₀, where L₀ is initial length and L_{F} is elongated length.

### Preparatory Example 1: Trimethylhexyldiurethanedialkyne ("Alkyne 1")

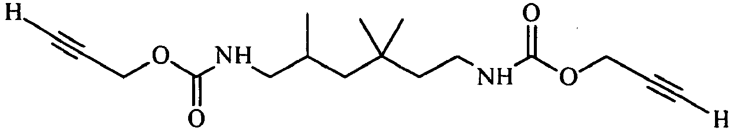

Propargyl alcohol (20.00 g, 0.36 mol, Alfa Aesar), trimethyl-1,6-diisocyanatohexane (37.51 g, 0.18 mol, Aldrich), and one drop of dibutyltin dilaurate (Alfa Aesar) were added to a jar. The jar was capped and the mixture was placed in a cold water bath with stirring. After the exotherm had subsided, the mixture was held at room temperature for 17 hours. A thick, yellow liquid was obtained.

### Preparatory Example 2: Triyne triazine trione ("Alkyne 2")

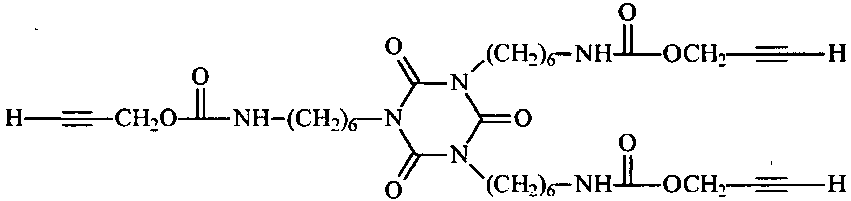

Propargyl alcohol (11.85 g, 0.21 mol, Aldrich), the isocyanurate of hexamethylene diisocyanate (40.71 g, available as DESMODUR™ N-3300 from Bayer), and one drop of dibutyltin dilaurate (Alfa Aesar) were added to a jar. The jar was capped and the mixture was placed in an ice water bath with stirring. After the exotherm had subsided, the mixture was heated at 65 °C for 2 hours. A thick, yellow liquid was obtained.

### Preparatory Example 3: Tricyclodecane dinorbornene ("Alkene 1")

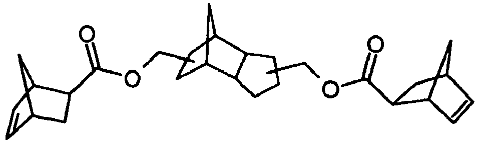

Cyclopentadiene was cracked and distilled from dicyclopentadiene (Aldrich, St. Louis, MO) by heating 140 g of dicyclopentadiene at 175 °C for 6 hours and collecting the distillate. 90 g of the freshly cracked cyclopentadiene was slowly added to a dried round bottom flask with 175 g of tricyclodecane dimethanol diacrylate (Aldrich, St. Louis, MO). This solution was stirred at 55 °C for 20 hours, after which; excess cyclopentadiene was removed under vacuum (26.7 Pa (0.2 Torr) for 4 hours). The resulting tricyclodecane dinorbornene (ALKENE 1) was used without further purification. The physical properties of the shape memory polymer composition derived from Alkene 1 is shown in Table 1 as Comparative Example 1.

### Examples 1-3: Thiol-yne Formulations

Multifunctional alkynes from Preparatory Examples 1-2 were blended with multifunctional thiol monomers to generate a number of thiol-yne materials. The multifunctional thiol monomers listed in Table 1 below include 1,4-bis -3-mercaptobutylyloxy butane (BD1, Showa Denko, Tokyo, JP) and pentaerythritol tetrakis mercaptopropionate (PETMP, Aldrich). Sample formulations were made according to the table below. The initiating package (IP) for each formulation was made by premixing 4 g of 2-, 4-, 6-trimethylbenzoyl-diphenyl-phosphineoxide (TPO-L™, BASF), 4 g of toluene, 0.12 g of propenylphenol (Aldrich), and 0.2 g of butylated hydroxytoluene (Aldrich). Samples were blended using a speed mixer (5 min @ 3000 RPM), heating the samples when necessary to achieve uniform mixing.

Teflon molds with troughs approximately 3.6 cm × 0.5 cm × 0.3 cm (1.4" x 0.2" x 0.1") were filled with the polymerizable composition. The mold was placed under a LED array (380 nm, 100 mW/cm², 10 min) to photocure each sample set. After photocure, samples were placed in an oven at 90 °C for 2 hours to post cure. After post cure, the polymer specimens were removed from the mold and dimensionally measured.

Teflon molds with three troughs approximately 5.92 cm × 0.99 cm × 0.48 cm (2.33" x 0.39" x 0.19") were filled with sample monomer formulations. The mold was placed under an LED array (380 nm, 100 mW/cm², 10 min) to photocure three bars of each sample set. After photocure, samples were placed in an oven at 90 °C for 2 hours to post cure and then removed from the mold. A 0.5 cm (0.2") notch was cut into each sample with a low speed Isomet saw (Buehler, IL) at the mid point along the length of the bar. Using a sharp razor blade, a slight crack was started within the notch of each sample.

A stainless steel mold with three dogbone troughs 10 cm × 1.5 cm (0.8 cm neck) × 0.18 cm (4" x 0.6" (0.3" neck) x 0.07") was treated with a PTFE release spray and filled with the sample formulations from Examples 1, and 4-8 as indicated in Table 1. The mold was placed under an LED array (380 nm, 100 mW/cm², 10 min) to photocure three bars of each sample set. After photocure, samples were placed in an oven at 90 °C for 2 hours to post cure and then removed from the mold.

### Examples 4-7: Thiol-yne Blended with Multifunctional Norbornenes

Multifunctional alkynes and multifunctional thiols from Preparatory Examples 1 -3 were systematically blended with the multifunctional norbornene ALKENE 1 from Preparatory Example 3. Samples were blended using a speed mixer (5 min @ 3000 RPM), heating the samples when necessary to achieve uniform mixing. The initiating package (IP) is the same as used in Examples 1-3. The material tests described in Examples 1-3 were repeated.

### Example 8: Shape Memory Characterization

A polymer sample with dimensions of 3.6 cm × 0.5 cm × 0.3 cm (1.4" x 0.2" x 0.1") was made using the formulation of Example 1 following similar procedures outlined in Examples 1-3. The sample was loaded into the tensile clamps of a Q800 series dynamic mechanical analyzer (TA instruments, New Castle, DE). The material was equilibrated at a temperature of 50 °C, the temperature at which maximum elongation of Example 1 has been observed. A static force was applied to produce a strain of approximately 12%. The static force was held constant as the material was quenched to 20 °C at 10 °C/min. The force was then relaxed and the temperature was ramped from 20 to 80 °C at 2 ° C/min while monitoring the strain recovery of the material. The material was subjected to additional cycles of this strain recovery testing method.

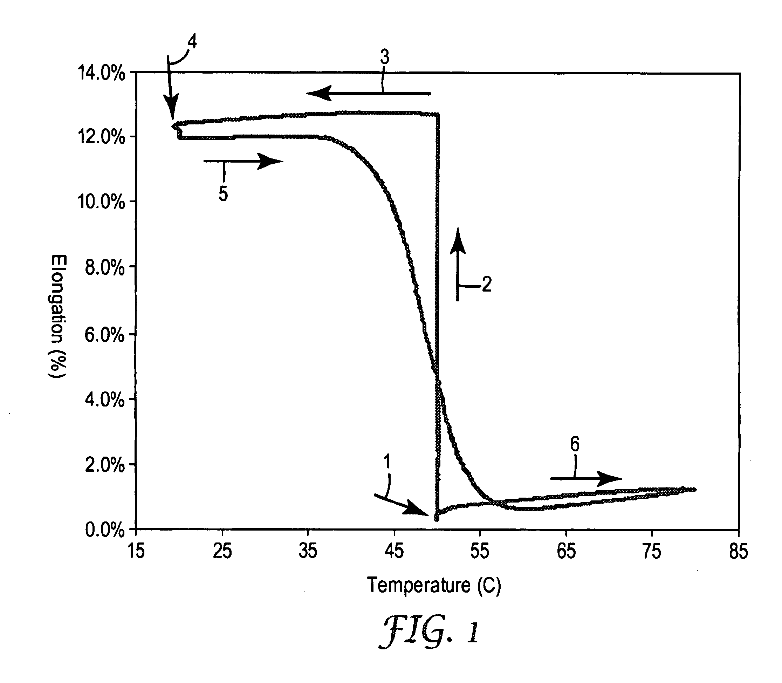

Figure 1 depicts a shape memory cycle for a specimen from Example 1. The points indicated by arrows are as follows: 1) Cycle starting point at zero stress and 50 °C. 2) A stress is placed upon the specimen to induce elongation to a temporary shape. 3) While stress is constant, the sample is quenched by rapidly decreasing temperature to lock in temporary shape. 4) The induced stress is taken off the sample and the specimen holds its temporary shape. 5) The sample is slowly heated and the sample recovers back to the permanent or non-elongated shape. 6) Cycle end point.

### Comparative Example 1: Thiol-norbornene Shape Memory Polymer

A comparative thiol-norbornene material without the alkyne component was generated using Alkene 1 from Preparatory Example 1, PETMP, and the initiator package IP similar to Examples 1-7. The sample was cured, post cured, and tested following the methods outlined in Examples 1-7.

### Comparative Example 2: Acrylic Based Shape Memory Polymer

Isobornyl acrylate (60 g, Sartomer, Exton, PA), tetrahydrofurfuryl acrylate (30 g, Sartomer, Exton, PA), difunctional aliphatic urethane oligomer CN9009 (10 g, Sartomer Exton, PA), and TPO-L photoinitiator (0.33 g, BASF, Mt. Olive, NJ) were mixed thoroughly with a magnetic stir bar for 1 hour, using the general procedures described in U.S. 7,521,015 (Cheng et al.) and 7,463,417 (Duncan et al.).

Cured samples of the acrylic SMP were prepared and analyzed according to the same procedures as described in Examples 1-7. A comparison of the T_{g} profiles for the thiol-yne Example 1 and the acrylic Comparative Example 1 is shown in Figure 2.

In each Example 1-7, the peak width of the T_{g} curve (FHPW) is relatively narrow and changes little with formulation. When compared to the acrylic shape memory material of Comparative Example 2, however, the peak widths of the thiol-yne materials are significantly lower than the acrylic material of similar T_{g}. This narrow peak width can be advantageous in shape memory applications as the temporary shape will be stable over a greater range of storage conditions, as well as by increasing the accuracy of the actuation of shape recovery at a desired temperature.

**Table 1**

| Example | Alkyne 1 | Alkyne 2 | Alkene 1 | PETMP | BD1 | IP | Tg | FHPW | St. Mod @ 20 °C + Tg | Fracture Toughness | Elongation @ 10°C - Tg |
|---|---|---|---|---|---|---|---|---|---|---|---|
| | (g) | (g) | (g) | (g) | (g) | (g) | (°C) | (°C) | (MPa) | (Mpa*m^{0.5}) | (°C) |
| 1 | 8.0 | 0.0 | 0.0 | 12.0 | 0.0 | 0.4 | 60.0 | 16.3 | 39.1 | 1.85 | 26.0 |
| 2 | 6.1 | 2.05 | 0.0 | 11.85 | 0.0 | 0.4 | 61.5 | 18.9 | 31.0 | 2.19 | Not measured |
| 3 | 4.5 | 4.1 | 0.0 | 11.4 | 0.0 | 0.4 | 60.3 | 18.6 | 27.6 | 2.60 | Not measured |
| 4 | 6.4 | 0.0 | 2.2 | 11.2 | 0.0 | 0.4 | 60.0 | 15.3 | 24.6 | 1.81 | 36.3 |
| 5 | 4.8 | 0.0 | 4.8 | 10.2 | 0.0 | 0.4 | 61.0 | 16.0 | 18.6 | 1.59 | 48.2 |
| 6 | 2.8 | 0.0 | 8.2 | 9.0 | 0.0 | 0.4 | 61.3 | 13.8 | 12.1 | 0.83 | 53.4 |
| Comp 1 | 0.0 | 0.0 | 12.8 | 7.0 | 0.0 | 0.4 | 70.3 | 16.5 | 5.0 | 0.78 | 130.4 |
| 7 | 4.8 | 0.0 | 4.8 | 8.0 | 2.2 | 0.4 | 49.9 | 13.5 | 12.2 | 1.34 | 60.6 |
| Comp 2 | | | | | | | 60.0 | 23.0 | 2.70 | 0.53 | 200 |

Example 1 in Table 1 represents a thiol-yne material (Alkyne 1 with PETMP) showing a T_{g} of 60 °C, excellent fracture toughness at room temperature, and a high storage modulus in the polymer's rubbery regime. As Alkyne 2 is added into this system, the polymer's fracture toughness increases, thereby enhancing the material's ability to be deformed into useful temporary shapes without fracturing. As Alkene 1 is blended with Alkyne 1, the T_{g} remains relatively constant, yet the fracture toughness and storage modulus in the polymer's rubber regime (+20 °C Tg) are significantly reduced. Storage modulus in the polymers rubbery state is thought to correlate with the amount of recovery force or work available in the material when transitioning from temporary to permanent shape. Thus, it is often desirable to have a high storage modulus in this regime for shape memory application.

It is noted that as Alkene 1 is blended with Alkyne 1 and PETMP, the available elongation increases accordingly with the difunctional alkene, theoretically by lowering the overall cross-link density in the thiol-yne network. Greater elongation is advantageous in shape memory polymers as it allows for a wider range of possible temporary shapes. Crosslink density can be reduced and elongation may be increased even further by reducing the amount of tetrafunctional thiol (PETMP). This is demonstrated in comparing similar formulations of Example 5 and Example 7 where the addition of difunctional thiol BD1 increases elongation, though at the cost of T_{g}, storage modulus, and fracture toughness.

## Claims

1. A shape memory polymer composition comprising:
a) an alkynyl compound having at least one reactive alkynyl group,
b) a polythiol,
c) less than 2 wt.% of a free radical initiator;
wherein the 2x molar equivalents of alkynyl groups of the polyalkynyl compound is +/-20% of the molar equivalents of thiol groups of the polythiol.

2. The shape memory polymer composition of claim 1 wherein the alkynyl compound is of the formula: 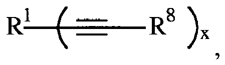 wherein
R¹ is a polyvalent hydrocarbyl group, and x is at least 1, and R⁸ H or a (hetero)hydrocarbyl group.

3. The shape memory polymer composition of claim 2 wherein the alkynyl compound is of the formula: 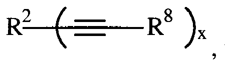 wherein
R² is an aliphatic or aromatic group, said aliphatic group optionally containing one or more esters, amides, ethers, or urethanes functional groups, R⁸ is H or a (hetero)hydrocarbyl group and x is at least 1.

4. The shape memory polymer composition of claim 2 wherein the polyalkynyl compound is of the formula: 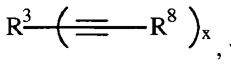 wherein
R³ is a heterocyclic group, R⁸ is H or a (hetero)hydrocarbyl group and x is at least 1.

5. The shape memory polymer composition of claim 4 wherein the polyalkynyl compound is of the formula: 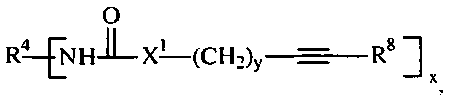 wherein
R⁴ is a (hetero)hydrocarbyl group.
X¹ is -O-, -S- or -NR⁶-, where R⁶ is H or C₁-C₄ alkyl,
R⁸ is H or a (hetero)hydrocarbyl group; and
x is at least 1.

6. The shape memory polymer composition of claim 1 wherein said polythiol is of the formula R⁵-(SH)ₙ, where R⁵ is (hetero)hydrocarbyl group having a valence of n, and n is at least 2.

7. A shaped article comprising the cured composition of claim 1.

8. The shaped article of claim 7 wherein the shaped article is in a deformed state.

9. A method for preparing a shaped article comprising the step of casting the composition of claim 1 into a mold, curing the molded article to impart a permanent shape, and deforming the cured molded article to a temporary deformed shape.

## Patentansprüche

1. Formgedächtnispolymerzusammensetzung, umfassend:
a) eine Alkinylverbindung mit mindestens einer reaktiven Alkinylgruppe,
b) ein Polythiol,
c) weniger als 2 Gew.-% eines Radikalinitiators;
wobei das 2fache der Moläquivalente von Alkinylgruppen der Polyalkinylverbindung gleich +/- 20% der Moläquivalente von Thiolgruppen des Polythiols ist.

2. Formgedächtnispolymerzusammensetzung nach Anspruch 1, wobei die Alkinylverbindung die Formel: 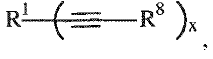 aufweist, wobei
R¹ für eine mehrwertige Hydrocarbylgruppe steht und x für mindestens 1 steht und R⁸ für H oder eine (Hetero)hydrocarbylgruppe steht.

3. Formgedächtnispolymerzusammensetzung nach Anspruch 2, wobei die Alkinylverbindung die Formel: 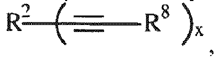 aufweist, wobei
R² für eine aliphatische oder aromatische Gruppe steht, wobei die aliphatische Gruppe gegebenenfalls ein oder mehrere ester-, amid-, ether- oder urethanfunktionellen Gruppen enthält, R⁸ für H oder eine (Hetero)hydrocarbylgruppe steht und x für mindestens 1 steht.

4. Formgedächtnispolymerzusammensetzung nach Anspruch 2, wobei die Polyalkinylverbindung die Formel: 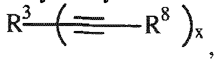 aufweist, wobei
R³ für eine heterocyclische Gruppe steht, R⁸ für H oder eine (Hetero)hydrocarbylgruppe steht und x für mindestens 1 steht.

5. Formgedächtnispolymerzusammensetzung nach Anspruch 4, wobei die Polyalkinylverbindung die Formel: 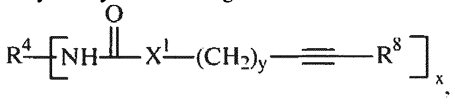 aufweist, wobei
R⁴ für eine (Hetero)hydrocarbylgruppe steht,
X¹ für -O-, -S- oder -NR⁶- steht, wobei R⁶ für H oder C₁-C₄-Alkyl steht,
R⁸ für H oder eine (Hetero)hydrocarbylgruppe steht und
x für mindestens 1 steht.

6. Formgedächtnispolymerzusammensetzung nach Anspruch 1, wobei das Polythiol die Formel R⁵-(SH)ₙ aufweist, wobei R⁵ für eine (Hetero)hydrocarbylgruppe mit einer Wertigkeit von n steht und n für mindestens 2 steht.

7. Formkörper, umfassend die gehärtete Zusammensetzung nach Anspruch 1.

8. Formkörper nach Anspruch 7, wobei der Formkörper in einem verformten Zustand vorliegt.

9. Verfahren zur Herstellung eines Formkörpers, bei dem man die Zusammensetzung nach Anspruch 1 in eine Form gießt, den geformten Gegenstand härtet, um ihm eine permanente Form zu verleihen, und den gehärteten geformten Gegenstand in eine temporäre verformte Form verformt.

## Revendications

1. Composition de polymère à mémoire de forme, comprenant :
a) un composé alkynyle comportant au moins un groupe alkynyle réactif,
b) un polythiol,
c) moins de 2 % en poids d'un initiateur radicalaire ;
dans laquelle les 2x équivalents molaires de groupes alkynyle du composé polyalkynyle représentent ±20 % des équivalents molaires de groupes thiol du polythiol.

2. Composition de polymère à mémoire de forme selon la revendication 1, dans laquelle le composé alkynyle a la formule : 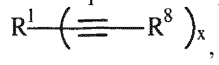 dans laquelle
R¹ est un groupe hydrocarbyle polyvalent, et x vaut au moins 1, et R⁸ est un atome d'hydrogène ou un groupe (hétéro)hydrocarbyle.

3. Composition de polymère à mémoire de forme selon la revendication 2, dans laquelle le composé alkynyle a la formule : 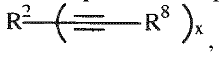 dans laquelle
R² est un groupe aliphatique ou aromatique, ledit groupe aliphatique contenant optionnellement un ou plusieurs groupes fonctionnels ester, amide, éther ou uréthane, R⁸ est un atome d'hydrogène ou un groupe (hétéro)hydrocarbyle et x vaut au moins 1.

4. Composition de polymère à mémoire de forme selon la revendication 2, dans laquelle le composé polyalkynyle a la formule : 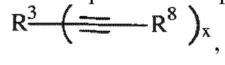 dans laquelle
R³ est un groupe hétérocyclique, R⁸ est un atome d'hydrogène ou un groupe (hétéro)hydrocarbyle et x vaut au moins 1.

5. Composition de polymère à mémoire de forme selon la revendication 4, dans laquelle le composé polyalkynyle a la formule : 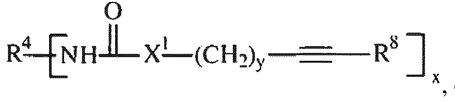 dans laquelle
R⁴ est un groupe (hétéro)hydrocarbyle,
X¹ est un groupe -O-, -S- ou -NR⁶-, où R⁶ est un atome d'hydrogène ou un groupe alkyle C₁-C₄,
R⁸ est un atome d'hydrogène ou un groupe (hétéro)hydrocarbyle ; et
x vaut au moins 1.

6. Composition de polymère à mémoire de forme selon la revendication 1, dans laquelle ledit polythiol a la formule R⁵-(SH)ₙ, où R⁵ est un groupe (hétéro)hydrocarbyle ayant une valence de n, et n vaut au moins 2.

7. Article formé comprenant la composition selon la revendication 1 à l'état durci.

8. Article formé selon la revendication 7, l'article formé étant dans un état déformé.

9. Procédé de fabrication d'un article formé, comprenant les étapes qui consistent à couler la composition selon la revendication 1 dans un moule, à durcir l'article moulé pour lui donner une forme permanente, et à déformer l'article moulé durci pour lui donner une forme déformée temporaire.
